## Europäisches Patentamt
## European Patent Office
## Office européen des brevets

(11) Veröffentlichungsnummer: **0 095 747**
**B1**

## EUROPÄISCHE PATENTSCHRIFT

(12)

(45) Veröffentlichungstag der Patentschrift:
03.09.86

(21) Anmeldenummer: 83105253.5

(22) Anmeldetag: 27.05.83

(51) Int. Cl.⁴: **A 01 D 41/00**, A 01 D 41/02

(54) Mähdrescher mit einer Drescheinheit.

(30) Priorität: 01.06.82 US 383848

(43) Veröffentlichungstag der Anmeldung:
07.12.83 Patentblatt 83/49

(45) Bekanntmachung des Hinweises auf die Patenterteilung:
03.09.86 Patentblatt 86/36

(84) Benannte Vertragsstaaten:
BE DE FR GB IT

(56) Entgegenhaltungen:
DE-A-2 015 584
DE-A-2 365 029
DE-B-1 900 220
SU-A-923 429

(73) Patentinhaber: DEERE & COMPANY, 1 John Deere Road, Moline Illinois 61265 (US)

(72) Erfinder: Gorsler, Karl- Günter, Thüringer Strasse 8, D-6660 Zweibrücken (DE)

(74) Vertreter: Feldmann, Bernhard, DEERE & COMPANY European Office, Patent Department Steubenstrasse 36- 42 Postfach 503, D-6800 Mannheim 1 (DE)

LIBER, STOCKHOLM 1986

## Beschreibung

Die Erfindung betrifft einen Mähdrescher mit einer in einem Hauptrahmen angeordneten aus einer Dreschtrommel und einem Dreschkorb bestehenden Drescheinheit, einer dieser nachgeschalteten ebenfalls im Hauptrammen angeordneten Trenneinrichtung, einem der Drescheinheit vorgeschalteten am Hauptrahmen lösbar angeschlossenen Fördergehäuse mit mindestens einem Förderer, der das Gut im Fördergehäuse der Drescheinheit zuführt.

Ein derartiger im allgemeinen als konventionell bezeichneter Mähdrescher (Mähdrescher M 2480, M 2580, M 2680, M 2685, Deutz-Fahr, 5473 a/807), der seit vielen Jahren von führenden Mähdrescherherstellern gebaut wird, ist in seiner Leistungskapazität Grenzen unterworfen, die von der Größe der Abscheidefläche und der der Dreschorgane abhängen. Er ermöglicht einen zufriedenstellenden Einsatz bei mittleren bis guten Ernteerträgen. Beim Einsatz in Gebieten mit hohen Ernteerträgen, in denen zudem auch das Stroh des Erntegutes weiterverwertet werden soll, ist die Leistungskapazität aber nicht mehr zufriedenstellend. Es wurden daher in den letzten Jahren große Anstrengungen gemacht, mit anderen Dreschsystemen (International 1460 Axial-flow, ENG-7-H) höhere Leistungen zu erzielen. Diese weisen jedoch Nachteile beim Dreschen von Gut mit höherem Feuchtigkeitsgehalt auf.

Andererseits ist es möglich, die Abscheidefläche zu vergrößern, was aber nur innerhalb der vom Gesetzgeber zugelassenen Maximalabmessungen möglich ist, weshalb diese Möglichkeit nur in Grenzen verwirklicht werden kann.

Auch ist bereits ein Mähdrescher mit einer weiteren Drescheinheit, einem Förderer und einem weiteren Förderer, die zusammen in einem an dem Hauptrahmen angeschlossenen Fördergehäuse untergebracht sind, bekannt (SU 232642). Da bei diesem Mähdrescher das Fördergehäuse ständig am Hauptrahmen angebaut bleibt, tritt zwar eine Erhöhung der Leistungskapazität auf, die aber mit einem erhöhten Kraft- und Bauaufwand verbunden ist, der nicht genutzt wird, wenn die Erntebedingungen dies nicht erfordern.

Die mit der Erfindung zu lösende Aufgabe wird darin gesehen, einen Mähdrescher der eingangs genannten Art unter Beibehaltung seiner am Hauptrahmen vorgesehenen das Gut bearbeitenden Komponenten derart weiterzubilden, daß seine Leistungskapazität wahlweise, d. h. je nach Bedarf, vergrößerbar ist.

Diese Aufgabe ist erfindungsgemäß dadurch gelöst worden, daß das Fördergehäuse gegen ein Fördergehäuse mit einer Abscheidevorrichtung austauschbar ist.

Unter Verwendung eines derart austauschbaren Fördergehäuses ist es möglich, den Mähdrescher entsprechend der von ihm geforderten Leistung auszurüsten und damit die Leistungskapazität des konventionellen Mähdreschers auf einfache Weise zu erhöhen. Dieses Konzept ergibt die Möglichkeit für den Benutzer, ein und denselben Mähdrescher je nach Bedarf mit einem herkömmlichen Fördergehäuse oder mit dem Fördergehäuse mit erhöhender Leistungskapazität auszustatten. Selbstverständlich ist der Benutzer in seiner Wahl frei und kann entweder den Mähdrescher mit hoher Leistungskapazität oder mit herkömmlicher Leistungskapazität bestellen. Dem Hersteller eröffnet der erfindungsgemäße Vorschlag die Möglichkeit, unter Beibehaltung der Basismaschine dem Benutzer Mähdrescher mit herkömmlicher oder erhöhter Leistungskapazität anzubieten, wodurch die Herstellungskosten infolge der Beibehaltung der Basismaschine für den Mähdrescher mit erhöhter Leistungskapazität in einem vertretbaren Rahmen gehalten werden.

Je nach Gutart und Reifezustand des zu dreschenden Gutes ist es zur wahlweisen Erhöhung der Leistungskapazität bereits ausreichend, wenn das austauschbare Fördergehäuse den Förderer und einen weiteren Förderer enthält, wobei der Förderer mit Vorrichtungen versehen ist, die ein Durchfallen von auszudreschendem Gut auf den weiteren Förderer ermöglichen. Durch diese erfindungsgemäße Ausgestaltung des Fördergehäuses wird sich relativ lose in dem Gut befindliches Korngut ausgelöst und dem weiteren Förderer zugeleitet, der dieses dann der Trenneinrichtung am Hauptrahmen aufgibt.

Enthält das zu erntende Gut schwer auszulösendes Korngut, dann ist es sinnvoll, wenn die Abscheidevorrichtung aus einer weiteren Drescheinheit besteht, die eine Dreschtrommel und einen Dreschkorb enthält, was einer Verwendung beim Ernten von Gut mit leicht auszulösendem Korngut jedoch nicht entgegensteht.

Selbstverständlich wird nach einem weiteren Vorschlag der Erfindung die größte Erhöhung der Leistungskapazität dann erreicht, wenn in dem austauschbaren Fördergehäuse die weitere Drescheinheit, der Förderer und der weitere Förderer vorgesehen sind, wobei der Förderer hinter der weiteren Drescheinheit angeordnet ist und das von dieser abgegebene, gedroschene Gut zu der Drescheinheit fördert und der weitere Förderer zum Fördern des von der weiteren Drescheinheit ausgedroschenen Guts zu der Trenneinrichtung dient.

Erfindungsgemäß wird eine optimale Abscheidewirkung von sich auf dem Förderer befindlichem Gut dadurch erzielt, daß der Förderer als Siebband in dem austauschbaren Fördergehäuse ausgebildet ist bzw. der Förderer in dem austauschbaren Fördergehäuse aus oszillierenden Elementen besteht. Wenn bei einem Mähdrescher mit mindestens einer Strohleittrommel in dem austauschbaren Fördergehäuse eine Zuführtrommel und die Strohleittrommel angeordnet sind und/oder die Zuführtrommel unmittelbar vor der weiteren Drescheinheit vorgesehen ist bzw. die Strohleittrommel unmittelbar ausgangsseitig einer von der weiteren Drescheinheit gebildeten Dreschzone angeordnet ist, dann kann davon ausgegangen werden, daß das Gut bedingt durch diese Zwangsführung, ohne Stauungen zu unterliegen, durch das Fördergehäuse transportiert wird. Eine optimale Führung wird natürlich beim Vorhandensein aller dieser Einzelmerkmale erzielt. Ist das austauschbare Fördergehäuse nur mit dem Förderer mit den Vorrichtungen zum Durchfallen des auszudreschenden Gutes und dem weiteren Förderer bestückt, dann kann auf schnelle und einfache Weise die volle Erhöhung der Leistungskapazität erreicht werden, wenn die weitere Drescheinheit mit der Zuführtrommel und der Strohleittrommel in einem eigenen Gehäuse angeordnet ist, das dann bei einem Mähdrescher mit einer Bergevorrichtung zwischen diese und das austauschbare Fördergehäuse geschaltet werden kann.

Je nach den gegebenen geometrischen Verhältnissen des Mähdreschers kann es auch von Vorteil sein, wenn die weitere Drescheinheit als Axialdrescheinheit ausgebildet ist. Um einer ungewollten und verfrühten Beaufschlagung des weiteren Förderers mit Gut, vor allem mit noch nicht gedroschenem Gut, vorzubeugen, ist es nach einem weiteren erfindungsgemäßen Merkmal vorteilhaft, wenn unterhalb der Zuführtrommel ein zur weiteren Drescheinheit führender den weiteren Förderer an seinem frontseitigen Ende abdeckender Zuführboden vorgesehen ist.

In der Zeichnung ist ein Ausführungsbeispiel eines erfindungsgemäßen Mähdreschers gezeigt, das nachfolgend beschrieben wird. Es zeigt:

Fig. 1 den Mähdrescher in Seitenansicht und teilweise geschnitten,

Fig. 2 eine Bergevorrichtung und ein erfindungsgemäßes Fördergehäuse im Schnitt entlang der Linie 2 - 2 in Fig. 1 und in Blickrichtung der Pfeile 2,

Fig. 3 einen Schnitt durch das Fördergehäuse entlang der Linie 3 - 3 in Fig. 2 und in Blickrichtung der Pfeile 3.

In Seitenansicht ist ein Mähdrescher 210 ersichtlich, dessen Hauptrahmen 212 von vorderen Rädern 214 und rückwärtigen Rädern 216 getragen wird und der oben einen Körnertank 218 mit einem Entleerrohr 220 trägt. Vor dem Körnertank 218 ist eine Fahrerkabine 222 nahe dem vorderen Hauptrahmenende und rückwärtig des Körnertanks 218 ist ein Antriebsmotor 224 montiert. In unterbrochenen Linien ist einer von mehreren nebeneinander angeordneten Strohschüttlern 226 angedeutet, unter denen sich mehrere einem Vorbereitungsboden 228 nachgeschaltete Siebe 230 erstrecken. Zur Abscheidung der Spreu dient ein Gebläse 232, wogegen die ausgesiebten Körner einer Schnecke 234 zugeführt werden. Die Trenneinrichtung im Hauptrahmen 212 wird somit von den Strohschüttlern 226, dem Vorbereitungsboden 228, den Sieben 230 und dem Gebläse 232 gebildet. Dieser Trenneinrichtung ist eine Dreschtrommel 236 zugeordnet, die teilweise von einem Dreschkorb 238 umgeben ist, über dessen oberen Ende sich eine Strohleittrommel 240 anschließt. An der Stirnseite 242 des Hauptrahmens 212 befindet sich zu jeder Seite ein teilbares Lager 244, um welches ein Fördergehäuse 246 unter Verwendung mehrerer Hydraulikzylinder 248 vertikal schwenkbar angelenkt ist. Um nun dieses Fördergehäuse 246 mit einer Bergevorrichtung 250, die im einzelnen ein Schneidwerk, ein Maispflückvorsatz oder eine Pick-up sein kann, verbinden zu können, sind nicht dargestellte Schnellverriegelungsvorrichtungen oder Bolzensicherungen im Bereich der Rückwand 252 der Bergevorrichtung 250 und der Frontseite 254 des Fördergehäuses 246 vorgesehen. Über die gesamte Breite der hier gezeigten Bergevorrichtung 250 erstreckt sich im wesentlichen eine Haspel 256, ein Mähwerk 258 und eine Zuführschnecke 260, die nur in unterbrochenen Linien angedeutet und teilweise von einer Mulde 262 umgeben ist.

Das Fördergehäuse 246 ist nahe seiner Frontseite 254 mit einer sich über dessen gesamte Breite erstreckenden weiteren Dreschtrommel 264 ausgerüstet, die, wie abgebildet, teilweise von einem konventionellen, genauso breiten Dreschkorb 266 umfangen ist. Der Raum zwischen diesem Dreschkorb 266 und der im Hauptrahmen 212 angeordneten Dreschtrommel 236 ist hauptsächlich von einer Trenneinrichtung 268 ausgefüllt, die zun Beispiel ein umlaufendes Siebband oder ein Schwingförderer ähnlich der bekannten Hordenschüttler sein kann. In der Trenneinrichtung 268 ist ein Siebband 270 (zum Beispiel nach der DE-PS 20 15 584) über eine vordere Umlenkwalze 272, eine hintere Antriebswalze 274 und eine Stützwalze 276 gespannt. Zusätzlich können nicht dargestellte Schwingvorrichtungen unter dem oberen Trumm 278 dem Siebband 270 eine weitere Bewegungskomponente erteilen, um somit eine höhere Abscheidekapazität zu erreichen. Es sind weiterhin eine Zuführtrommel 280 zwischen der Zuführschnecke 260 und dem Dreschkorb 266 und eine Strohleittrommel 282 am Auslauf des Dreschkorbes 266 vorgesehen, deren Bedeutung später erläutert wird. Von unterhalb des Dreschkorbes 266 bis zu dem Vorbereitungsboden 228 im Hauptrahmen 212 erstrecken sich mehrere nebeneinanderliegende Förderschnecken 284, die über nicht dargestellte Winkelgetriebe an einem ihrer Enden angetrieben werden und in nicht gezeigten halbrunden Gehäusen drehen. Letztlich verläuft von der Frontseite 254 bis zu dem Dreschkorb 266 ein Zuführboden, der die frontseitigen Enden der Förderschnecken 284 abdeckt. Selbstverständlich kann anstatt der Förderschnecken 284 auch ein Bandförderer Verwendung finden. Es kann von Vorteil sein, diese halbrunden Gehäuse nicht aus einem Bodenblech 286 des Fördergehäuses 246, sondern separat auszubilden. Sollten es die Umstände erfordern, können auch weniger Förderschnecken 284, als zum Abdecken der gesamten Breite des Fördergehäuses 246 erforderlich sind, verwendet werden, wobei der entstehende Zwischenraum zwischen den Förderschnecken 284 mit Dachblechen abzudecken wäre. Bezüglich des Antriebes der Zuführtrommel 280, der weiteren Dreschtrommel 264, der Strohleittrommel 282, der Antriebswalze 274 und den Förderschnecken 284 kann ein nicht dargestellter Hydromotor Verwendung finden. Alternativ bietet es sich an, den Antrieb direkt von der Dreschtrommel 236 abzuleiten bzw. beide Antriebsarten zu kombinieren.

Anhand der vorangegangenen Beschreibung ist der Materialfluß des Erntegutes nun wie folgt zu verstehen.

Das Erntegut wird von dem Mähwerk 258 geschnitten und mit Hilfe der Haspel 256 der Zuführschnecke 260 aufgegeben, die es auf die Breite des Fördergehäuses 246 zusammenführt und es an die Zuführtrommel 280 weitergibt. Diese fördert es in eine Dreschzone 281 zwischen der weiteren Dreschtrommel 264 und dem Dreschkorb 266, wo es einem Dreschvorgang unterliegt. Während das Erntegut entlang dem Dreschkorb 266 gerieben wird, scheiden sich ein Großteil der auszudreschenden Körner und kleine Erntegutteilchen von dem gesamten Erntegut ab und fallen durch den Dreschkorb 266 auf die Förderschnecken 284, von wo aus sie auf den Vorbereitungsboden 228 im Hauptrahmen 212 des Mähdreschers 210 gefördert werden. Das von der weiteren Dreschtrommel 264 bis an das obere Ende des Dreschkorbes 266 mitgenommene Erntegut wird von der Strohleittrommel 282 auf das Siebband 270 geschleudert und von diesem durch eine Öffnung 285 in der Stirnseite 242 zu der Dreschtrommel 236 transportiert. Während dieses Transportvorgangs werden noch im Erntegut befindliche Kleinteile durch die Erschütterungen des Siebbandes 270 herausgeschüttelt und fallen ebenfalls auf die Förderschnecken 284 zum Transport auf den Vorbereitungsboden 228. Das verbleibende Erntegut wird in einer Dreschzone 287 zwischen der Dreschtrommel 236 und dem Dreschkorb 238 einem zweiten Dreschvorgang unterworfen und teilt sich dabei wiederum in einen Anteil von Körnern und Spreu, die dem Vorbereitungsboden 228 zufallen, und einen Restteil an Erntegut, der von der Strohleittrommel 240 umgewendet den Strohschüttlern 226 zugeworfen wird. Der abschließende Trennvorgang vollzieht sich auf den Strohschüttlern 226 und den Sieben 230, wie es von konventionellen Mähdreschern bekannt ist.

Selbstverständlich ist es auch denkbar, lediglich die Zuführtrommel 280, die weitere Dreschtrommel 264, den Dreschkorb 266 und die Strohleittrommel 282 in einem Gehäuse, das an den Auslaß der Bergevorrichtung 250 angebaut ist, zusammenzufassen, und an welches sich rückwärtig ein bekanntes Fördergehäuse mit Paddelwalzen (siehe hierzu DE-PS 23 65 029) anschließen kann, unter der Voraussetzung, daß die von der weiteren Dreschtrommel 264 abgeschiedenen Kleinteile nicht mit dem gesamten Erntegut in die Dreschtrommel 236 gefördert werden, sondern vor dieser beim Übergang von Fördergehäuse zum Dreschkorb 238 auf den Vorbereitungsboden 228 fallen können. Dadurch ist die Möglichkeit gegeben, sowohl eine konventionelle Bergevorrichtung 250 wie auch ein konventionelles Fördergehäuse mit Paddelwalzen beizubehalten und lediglich das vorgenannte Gehäuse dazwischen zu schalten, wenn die Ernteverhältnisse dies erfordern.

Fernerhin kann das Fördergehäuse 246 mit einer Axialdreschtrommel und einem dazugehörigen Dreschkorb mit Dresch- und Trennteil bestückt werden, die sich von der Bergevorrichtung 250 bis zu der Dreschtrommel 236 im Hauptrahmen 212 erstrecken und unter welchen, wie zuvor beschrieben, Förderschnecken 284 angeordnet sind. Somit werden den Förderschnecken 284 sowohl die im Dreschteil als auch die im Trennteil des Axialdreschkorbes ausgeschiedenen Kleinteile zum Transport auf den Vorbereitungsboden 228 aufgegeben, während das restliche Erntegut einem zweiten Dreschvorgang durch die Dreschtrommel 236 unterzogen wird.

Soll aus Festigkeitsgründen oder sonstigen konstruktiven Maßnahmen das Fördergehäuse 246 nur mit der Trenneinrichtung 268 und den Förderschnecken 284 ausgestattet werden, kann die weitere Dreschtrommel 264 mit dem Dreschkorb 266 und der Strohleittrommel 282 in der Bergevorrichtung 250 zwischen der Zuführschnecke 260 und deren Rückwand 252 vor dem Einlaß in daß Fördergehäuse 246 eingebaut werden. Die Förderung der abgeschiedenen Kleinteile und des restlichen Erntegutes erfolgt danach analog.

Soll zur Raumersparnis auf die Zuführschnecke 260 in der Bergevorrichtung 250 verzichtet werden, dann kann anstelle dieser eine Axialdreschtrommel mit einem entsprechend ausgebildeten Axialdreschkorb Verwendung finden, unterhalb derer sich zwei Förderschnecken oder zwei Kratzförderer von den seitlichen Enden der Bergevorrichtung 250 bis zu dem Fördergehäuse 266 erstrecken. Selbstverständlich muß die Axialdreschtrommel aus zwei zur Mitte der Bergevorrichtung 250 hin fördernden Hälften bestehen, damit dort das nicht abgeschiedene Erntegut der in dem Fördergehäuse 246 befindlichen Trenneinrichtung zugeführt werden kann. Die bereits abgeschiedenen Kleinteile werden von den seitlichen Enden der Bergevorrichtung 250 zu den Förderschnecken 284 geführt, von wo aus der Transport in zuvor beschriebener Weise erfolgt. Auch hier ist wiederum die Möglichkeit gegeben, ein konventionelles Fördergehäuse mit Paddelwalzen zu verwenden, woraus sich die zusätzliche Möglichkeit ergibt, im Bedarfsfall die Bergevorricitung gegen eine konventioneller Bauart auszuwechseln, wenn dies die Umstände gebieten.

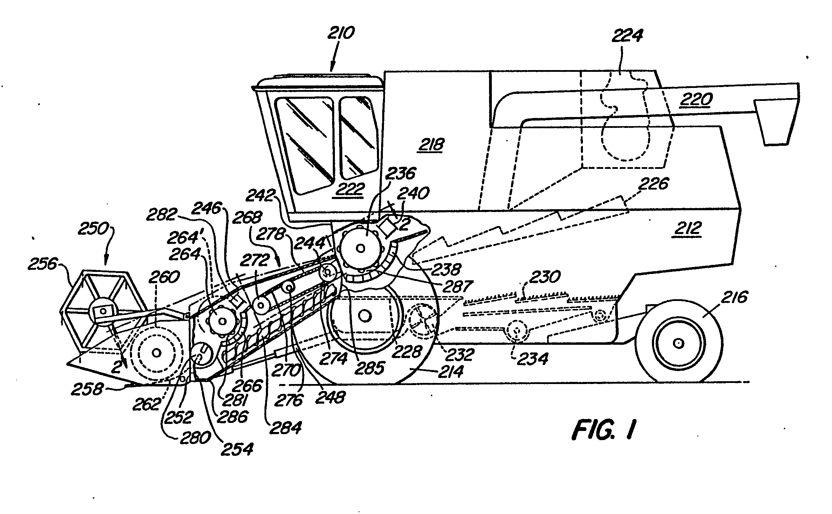

Von den konstruktiven Begebenheiten und den Einsatzverhältnissen des Mähdreschers 210 kann es abhängen, ob die weitere Dreschtrommel 264 nur ergänzend zu der Dreschtrommel 236 auszugestalten ist oder diese kapazitätsmäßig sogar übertrifft. Am sinnvollsten und wirtschaftlichsten ist es jedoch, der Dreschtrommel 236 und der weiteren Dreschtrommel 264 die gleiche Kapazität und die gleichen Baumaße (siehe Linie 264' in Fig. 1) zuzuteilen und somit aufgrund der Teilegleichheit Kosten zu sparen.

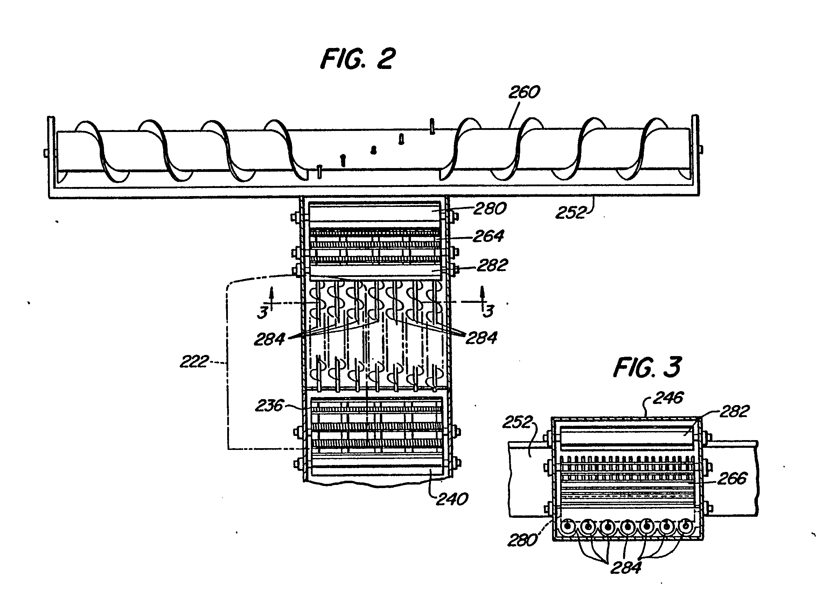

Die Figuren 2 und 3 zeigen das Vorbeschriebene nochmals in detaillierteren Ansichten.

Aus dem zuvor Beschriebenen geht hervor, daß nur das auszudreschende Gut einem weiteren Dreschvorgang unterworfen wird, während das bereits abgeschiedene Gut nur noch dem Siebvorgang unterliegt. Da sich also das Erntegut vor dem zweiten Dreschvorgang zwischen der Dreschtrommel 236 und dem Dreschkorb 238 um den Anteil der bereits abgeschiedenen Körner und Kleinteile-reduziert, findet eine unnötige Überlastung des Mähdreschers nicht statt.

Alle vorgenannten Ausführungen haben gemeinsam, daß sie an einem konventionellen Mähdrescher angeschlossen werden können, wodurch sich dessen Leistungskapazität beträchtlich erhöhen läßt, ohne daß er die durch die Straßenverkehrsordnung und beispielsweise durch die Versandrichtlinien der Bundesbahn vorgegebenen Abmessungen überschreitet.

Im Ganzen ist somit eine Tandem-Drescheinheit geschaffen, die zur Leistungssteigerung den an sich in einem herkömm-Lichen Mähdrescher im Fördergehäuse und/oder der Bergevorrichtung vorgesehenen Raum nutzt.

Ein weiterer Vorteil einer solchen Bauart ist darin zu sehen, daß derartige Mähdrescher selbstverständlich auch mit einem herkömmlichen Fördergehäuse bzw. einer Bergevorrichtung ohne Dresch- und Trenneinheit ausgerüstet werden können, d. h. zur eigentlichen Leistungssteigerung wird an dem Grundaufbau des Mähdreschers nichts geändert.

## Patentansprüche

1. Mähdrescher mit einer in einem Hauptrahmen (212) angeordneten aus einer Dreschtrommel (236) und einem Dreschkorb (238) bestehenden Drescheinheit, einer dieser nachgeschalteten ebenfalls im Hauptrahmen (212) angeordneten Trenneinrichtung (226-232), einem der Drescheinheit vorgeschalteten am Hauptrahmen (212) lösbar angeschlossenen Fördergehäuse (246) der mindestens einem Förderer (268), der das Gut im Fördergehäuse (246) der Drescheinheit zuführt, dadurch gekennzeichnet, daß das Fördergehäuse (246) gegen ein Fördergehäuse (246) mit einer Abscheidevorrichtung (264, 266, 268) austauschbar ist.

2. Mähdrescher nach Anspruch 1, dadurch gekennzeichnet, daß das austauschbare Fördergehäuse (246) den Förderer (268) und einen weiteren Förderer (284) enthält, wobei der Förderer mit Vorrichtungen versehen ist, die ein Durchfallen von auszudreschendem Gut auf den weiteren Förderer (284) ermöglichen.

3. Mähdrescher nach Anspruch 1 oder 2, dadurch gekennzeichnet, daß die Abscheidevorrichtung aus einer weiteren Drescheinheit besteht, die eine Dreschtrommel (264) und einen Dreschkorb (266) enthält.

4. Mähdrescher nach einem oder mehreren der vorherigen Ansprüche, dadurch gekennzeichnet, daß in dem austauschbaren Fördergehäuse (246) die weitere Drescheinheit (264, 266), der Förderer (268) und der weitere Förderer (284) vorgesehen sind, wobei der Förderer hinter der weiteren Drescheinheit angeordnet ist und das von dieser abgegebene, gedroschene Gut zu der Drescheinheit fördert und der weitere Förderer zum Fördern des von der weiteren Drescheinheit ausgedroschenen Guts zu der Trenneinrichtung (226 bis 232) dient.

5. Mähdrescher nach einem oder mehreren der vorherigen Ansprüche, dadurch gekennzeichnet, daß der Förderer (268) als Siebband (270) in dem austauschbaren Fördergehäuse (246) ausgebildet ist.

6. Mähdrescher nach einem oder mehreren der vorherigen Ansprüche, dadurch gekennzeichnet, daß der Förderer (268) in dem austauschbaren Fördergehäuse (246) aus oszillierenden Elementen besteht.

7. Mähdrescher nach einem oder mehreren der vorherigen Ansprüche mit einer Strohleittrommel (282), dadurch gekennzeichnet, daß in dem austauschbaren Fördergehäuse (246) eine Zuführtrommel (280) und die Strohleittrommel (282) angeordnet sind.

8. Mähdrescher nach Anspruch 7, dadurch gekennzeichnet, daß die Zuführtrommel (280) unmittelbar vor der weiteren Drescheinheit (264, 266) vorgesehen ist.

9. Mähdrescher nach Anspruch 7, dadurch gekennzeichnet, daß die Strohleittrommel (282) unmittelbar ausgangsseitig einer von der weiteren Drescheinheit (264, 266) gebildeten Dreschzone (281) angeordnet ist.

10. Mähdrescher nach einem oder mehreren der vorherigen Ansprüche, dadurch gekennzeichnet, daß die weitere Drescheinheit (264, 266) mit der Zuführtrommel (280) und der Strohleittrommel (282) in einem eigenen Gehäuse angeordnet ist.

11. Mähdrescher nach einem oder mehreren der vorherigen Ansprüche, dadurch gekennzeichnet, daß die weitere Drescheinheit (264, 266) als Axialdrescheinheit ausgebildet ist.

12. Mähdrescher nach einem oder mehreren der vorherigen Ansprüche, dadurch gekennzeichnet, daß unterhalb der Zuführtrommel (280) ein zur weiteren Drescheinheit (264, 266) führender den weiteren Förderer (284) an seinem frontseitigen Ende abdeckender Zuführboden vorgesehen ist.

### Claims

1. A combine harvester comprising a threshing unit which is disposed in a main frame (212) and which comprises a threshing drum (236) and a threshing concave (238), a separating means (226-232) which is disposed downstream of the threshing unit and which is also arranged in the main frame (212), a conveyor housing (246) which is disposed upstream of the threshing unit and which is connected releasably to the main frame (212) and which has at least one conveyor (268) for feeding the material in the conveyor housing (246) to the threshing unit, characterised in that the conveyor housing (246) can be exchanged for a conveyor housing (246) with a separating apparatus (264, 266, 268).

2. A combine harvester according to claim 1 characterised in that the exchangeable conveyor housing (246) contains the conveyor (268) and a further conveyor (284), wherein the conveyor is provided with means which permit material to be threshed out to fall through on to the further conveyor (284).

3. A combine harvester according to claim 1 or claim 2 characterised in that the separating apparatus consists of a further threshing unit which includes a threshing drum (264) and a threshing basket (266).

4. A combine harvester according to one or more of the preceding claims characterised in that provided in the exchangeable conveyor housing (246) are the further threshing unit (264, 266), the conveyor (268) and the further conveyor (284), wherein the conveyor is arranged downstream of the further threshing unit and conveys the threshed material delivered by the latter to the threshing unit and the further conveyor serves for conveying the material which has been threshed out by the further threshing unit, to the separating means (226 to 232).

5. A combine harvester according to one or more of the preceding claims characterised in that the conveyor (268) is in the form of a sieve belt (270) in the exchangeable conveyor housing (246).

6. A combine harvester according to one or more of the preceding claims characterised in that the conveyor (268) in the exchangeable conveyor housing.(246) consists of oscillating elements.

7. A combine harvester according to one or more of the preceding claims, having a straw guide drum (282), characterised in that a feed drum (280) and the straw guide drum (282) are arranged in the exchangeable conveyor housing (246).

8. A combine harvester according to claim 7 characterised in that the feed drum is provided directly upstream of the further threshing unit (264, 266).

9. A combine harvester according to claim 7 characterised in that the straw guide drum (282) is arranged directly on the output side of a threshing zone (281) formed by the further threshing unit (264, 266).

10. A combine harvester according to one or more of the preceding claims characterised in that the further threshing unit (264, 266) with the feed drum (280) and the straw guide drum (282), is arranged in its own housing.

11. A combine harvester according to one or more of the preceding claims characterised in that the further threshing unit (264, 266) is in the form of an axial threshing unit.

12. A combine harvester according to one or more of the preceding claims characterised in that provided below the feed drum (280) is a feed bottom member which leads to the further threshing unit (264, 266) ard which covers the further conveyor (284) at its front end.

### Revendications

1.- Moissonneuse-batteuse comportant un ensemble de battage constitué par un rotor formant batteur (236) et par un contre-batteur (238) et disposé dans un châssis principal (212), un ensemble séparateur (226 - 232) monté én aval, disposé également dans le châssis principal (212), un carter de convoyeur (246) disposé en amont de l'ensemble de battage et rapporté amoviblement sur le châssis principal (212), ce carter comportant au moins un convoyeur ou transporteur (268) qui amène les produits, dans le carter de convoyeur (246), à l'ensemble de battage, caractérisée en ce que le carter de convoyeur (246) peut être remplacé par un carter de convoyeur (246) équipé d'un dispositif séparateur (264, 266, 268).

2.- Moissonneuse-batteuse suivant la revendication 1, caractérisée en ce que le carter de convoyeur interchangeable (246) contient le convoyeur (268) et un autre convoyeur (284), le premier convoyeur étant équipé de dispositifs qui permettent la chute à travers lui des produits devant être battus, sur cet autre convoyeur (284).

3.- Moissonneuse-batteuse suivant la revendication 1 ou 2, caractérisée en ce que le dispositif séparateur est constitué par un autre ensemble de battage qui comporte un rotor formant batteur (264) et un contre-batteur (266).

4.- Moissonneuse-batteuse suivant une ou plusieurs des revendications précédentes, caractérisée en ce que l'autre ensemble de battage (264, 266), le convoyeur (268) et l'autre convoyeur (284) sont prévus dans le carter de convoeyur interchangeable (246), le convoyeur étant disposé derrière cet autre ensemble de battage et les produits battus provenant de celui-ci étant amenés par ce convoyeur à l'ensemble de battage, l'autre convoyeur servant à l'acheminement des produits battus par cet autre ensemble de battage jusqu'à l'ensemble séparateur (226 à 232).

5.- Moissonneuse-batteuse suivant une ou plusieurs des revendications précédentes, caractérisée en ce que le convoyeur (268) est constitué par une bande en forme de crible (270) disposée dans le carter de convoyeur interchangeable (246).

6.- Moissonneuse-batteuse suivant une ou plusieurs des revendications précédentes, caractérisée en ce que le convoyeur (268) monté dans le carter de convoyeur interchangeable (246) est constitué par des éléments oscillants.

7.- Moissonneuse-batteuse suivant une ou plusieurs des revendications précédentes, comportant un tambour guide-paille (282), caractérisée en ce qu'un tambour d'amenée (280) et le tambour guide-paille (282) sont disposés dans le carter de convoyeur interchangeable (246).

8.- Moissonneuse-batteuse suivant la revendication 7, caractérisée en ce que le tambour d'amenée (280) est prévu directement devant l'autre ensemble de battage (264, 266).

9.- Moissonneuse-batteuse suivant la revendication 7, caractérisée en ce que le tambour guide-paille (282) est disposé immèdiatement du côté sortie d'une zone de battage (281) formée par l'autre ensemble de battage (264, 266).

10.- Moissonneuse-batteuse suivant une ou plusieurs des revendications précédentes, caractérisée en ce que l'autre ensemble de battage (264, 266), avec le tambour d'amenée (280) et le tambour guide-paille (282), sont disposés dans un carter propre.

11.- Moissonneuse-batteuse suivant une ou plusieurs des revendications précédentes, caractérisée en ce que l'autre ensemble de battage (264, 266) se présente sous la forme d'un ensemble de battage de type axial.

12.- Moissonneuse-batteuse suivant une ou plusieurs des revendications précédentes, caractérisée en ce qu'il est prévu, au-dessous du tambour d'amenée (280), une table d'amenée aboutissant à l'autre ensemble de battage (264, 266) et recouvrant l'autre convoyeur (284) à son extrémité avant.

FIG. 1

0 095 747

FIG. 2

FIG. 3